(19) Europäisches Patentamt
European Patent Office
Office européen des brevets

(11) Veröffentlichungsnummer: **0 212 610 B1**

(12) # EUROPÄISCHE PATENTSCHRIFT

(45) Veröffentlichungstag der Patentschrift: **22.01.92**

(51) Int. Cl.$^5$: **C08F 2/30**

(21) Anmeldenummer: **86111407.2**

(22) Anmeldetag: **18.08.86**

(54) **Verwendung von 2-Alkylalkanol-1-polyglykolethern.**

(30) Priorität: **26.08.85 DE 3530405**

(43) Veröffentlichungstag der Anmeldung:
**04.03.87 Patentblatt 87/10**

(45) Bekanntmachung des Hinweises auf die Patenterteilung:
**22.01.92 Patentblatt 92/04**

(84) Benannte Vertragsstaaten:
**AT BE CH DE FR GB IT LI NL**

(56) Entgegenhaltungen:
**EP-A- 0 013 371**
**EP-A- 0 129 720**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Höfer, Rainer, Dr.**
**Klever Strasse 31**
**W-4000 Düsseldorf 30(DE)**
Erfinder: **Wegemund, Bernd, Dr.**
**Händelweg 3**
**W-5657 Haan(DE)**
Erfinder: **Krause, Horst-Jürgen, Dr.**
**Am Nettchesfeld 22**
**W-4000 Düsseldorf 13(DE)**

EP 0 212 610 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung bestimmter 2-Alkylalkanol-1-polyglykolether insbesondere mit unverzweigten oder phenylsubstituierten Alkylresten in wäßrigen Polymerdispersionen und Latices, um diesen bestimmte Eigenschaften zu verleihen, die in mehrfacher Hinsicht gewünscht und vorteilhaft sind.

Gegenstand der deutschen Patentanmeldung P 35 20 185.1 sind 2-Benzylalkanol-1-polyglykolether, ihre Herstellung und ihre Verwendung in Wasch- und Reinigungsmitteln. Beschrieben werden dort die guten bis überlegenen Wascheigenschaften der Produkte, insbesondere im höheren Konzentrationsbereich.

Weiterhin sind 2-Alkylalkanole mit einer seitenständigen Alkylgruppe im Prinzip bekannt. Derartige Produkte lassen sich ebenfalls durch die sogenannte Guerbet-Reaktion, das ist die Dimerisierung von Alkoholen oder Alkoholgemischen, herstellen.

Gegenüber diesem Stand der Technik, der sich mit Reinigungsmittelgemischen beschäftigt, geht die vorliegende Erfindung von der Aufgabe aus, bestimmte Verbesserungen in wäßrigen Polymerdispersionen bzw. Latices einzustellen. Wäßrige Polymerdispersionen und entsprechende Latices, die durch Emulsionspolymerisation gewonnen werden, haben bekanntlich in der Technik vielfaltige Einsatzzwecke, so finden sie beispielsweise als Bindemitteldispersionen Verwendung, die bei Transport, Lagerung und Einsatzzweck den unterschiedlichsten Beanspruchungen ausgesetzt werden. Polymerdispersionen der geschilderten Art sind ansich hochsensible instabile 2-Phasen-Systeme, die unter den geschilderten Anwendungsbedingungen der Praxis zahlreichen destabilisierenden Einflüssen unterworfen sind. Ihre Stabilisierung - d.h. insbesondere die Verhinderung eines unerwünschten Aufrahmens oder Koagulierens - stellt für den Polymerfachmann einen komplexen Kreis von Problemen dar, zu dem die vielgestaltigsten Lösungsvorschläge gemacht worden sind. Polymerdispersionen bzw. -emulsionen der geschilderten Art müssen beispielsweise gegen Coagulation durch Gefrier- und Auftaueinflüsse, Elektrolytzugaben oder die bei der Formulierung zu Dispersionsfarben, Beschichtungsmitteln, Dispersionsputzen, Lederzurichtungen, Polituren, Klebstoffen, Textilhilfsmitteln oder andere dem Fachmann bekannte Einsatzgebiete auftretenden Scher- und sonstige Kräfte geschützt werden. Für diese Stabilisierungsaufgaben stehen bereits zahlreiche Tenside zur Verfügung. So werden vielfach anionische Tenside, nichtionische Tenside oder Gemische dieser beiden Klassen eingesetzt. Die bekannten Systeme sind jedoch vielfach hinsichtlich ihrer biologischen Abbaubarkeit in Abwässern unbefriedigend.

Allgemein gilt, daß gerade für die Anwendung bei der Emulsionspolymerisation laufend neue oberflächenaktive Mittel gesucht werden, welche günstige Eigenschaften aufweisen und zwar sowohl bei Herstellung der Emulsion als auch während der Polymerisation und insbesondere hinsichtlich der Eigenschaften des entstehenden Polymerlatex. Dies gilt umso mehr, als es dem Fachmann nicht möglich ist, aus dem chemischen Aufbau eines oberflächenaktiven Mittels auch seine Eigenschaften als Polymerisationsemulgator bzw. -stabilisator zuverlässige Rückschlüsse zu ziehen.

Gegenstand der Erfindung ist somit die Verwendung der Umsetzungsprodukte von primären 2-Alkylalkanolen, die 12 - 36 C-Atome aufweisen, mit Ethylenoxid und gewünschtenfalls Propylenoxid als Emulgatoren oder Coemulgatoren bei der Emulsionspolymerisation ethylenisch ungesättigter Monomerer in einer Menge von 0,1 bis 10 Gew.-% bezogen auf Gesamtdispersion.

Erfindungsgemäß werden Umsetzungsprodukte solcher 2-Alkylalkanole-(1) eingesetzt, die 12 - 36 C-Atome aufweisen, wobei vorzugsweise 8 - 20 C-Atome in der Hauptkette und 4 - 16 C-Atome in der Alkylseitenkette liegen. Die Hauptkette ist vorzugsweise unverzweigt, die Seitenkette kann unverzweigt sein, aber auch Verzweigungen, aliphatische Ringe oder auch Phenylsubstituenten aufweisen, die ihrerseits wieder alkylsubstituiert sein können.

In einer bevorzugten Ausführungsform ist die Verwendung von 2-Benzylalkanol-1-Polyglykolethern Gegenstand der Erfindung.

Eine spezielle Klasse von 2-Alkylalkanol-1-polyglykolether, die 2-Benzylalkanol-1-Polyglykolether, sind in der deutschen Patentanmeldung P 35 20 185.1 beschrieben; andere 2-Alkylalkanolpolyglykolether sind analog herstellbar. Gegenstand dieser Patentanmeldung sind 2-Benzylalkanol-1-Polyglykolether der allgemeinen Formel 1

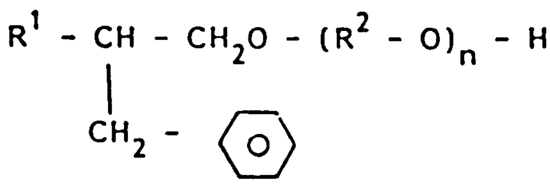

(I)

in der $R^1$ einen Alkylrest mit 6 - 22 C-Atomen, $R^2$ einen Alkylenrest mit 2 - 6 C-Atomen und n ganze Zahlen von 1 - 100 bedeuten.

$R^1$ steht vorzugsweise für einen Alkylrest mit 8 - 18 C-Atomen. $R^2$ steht vorzugsweise für eine Ethylengruppe oder Propylengruppe, d. h. der Ausdruck ($R^2$ - O) steht für eine Ethylenglykolethergruppe (EO) und/oder eine Propylenglykolethergruppe (PO). In einer Verbindung der Formel 1 können daher nur EO-Gruppen oder nur PO-Gruppen oder auch beide Gruppen in beliebiger Reihenfolge stehen. Die Zahl n beträgt vorzugsweise 5 - 80 und insbesondere 8 - 50.

Beispiele für derartige Verbindungen, in denen x und y voneinander unabhängige ganze Zahlen von 1 - 100 und x + y = n darstellen, sind:

2-Benzyloctanol-$(EO)_x$
2-Benzyldecanol-$(EO)_x$
2-Benzyldodecanol-$(EO)_x$
2-Benzyltetradecanol-$(EO)_x$
2-Benzylhexadecanol-$(EO)_x$
2-Benzyloctadecanol-$(EO)_x$
2-Benzyldecanol-$(EO)_x$-$(PO)_y$
2-Benzyldodecanol-$(EO)_x$-$(PO)_y$
2-Benzyltetradecanol-$(EO)_x$-$(PO)_y$
2-Benzylhexadecanol-$(EO)_x(PO)_y$
2-Benzyloctanol-$(PO)_y$-$(EO)_x$
2-Benzyldecanol-$(PO)_y$-$(EO)_x$
2-Benzyldodecanol-$(PO)_y$-$(EO)_x$
2-Benzyltetradecanol-$(PO)_y$-$(EO)_x$

Die Herstellung der Verbindungen erfolgt in einer 1. Stufe durch Erhitzen eines Gemisches aus Alkanol und Benzylalkohol auf Temperaturen von 150 bis 280 °C in Gegenwart einer alkalisch reagierenden Alkalimetallverbindung (gemischte GUERBET-Reaktion). Um eine konkurrierende homologe GUERBET-Reaktion des Alkanols zu unterdrücken, wird der Benzylalkohol zweckmäßigerweise im Überschuß eingesetzt. Dieser Überschuß kann bis zu 10fach molar sein, vorzugsweise ist er 2fach bis 3fach molar. Als alkalisch reagierende Katalysatoren kommen die Hydroxide, Carbonate, Borate, Silikate und Phosphate des Kaliums oder Natriums in Betracht, ebenso solche Alkalimetallverbindungen, die mit dem entstehenden Reaktionswasser unter Bildung der Hydroxide reagieren, z. B. Alkoholate, Oxide, Amide und Hydride. Vorzugsweise wird Kaliumhydroxid in Anteilen von 0,1 bis 0,25 Mol-%, bezogen auf eingesetztes Alkanol, verwendet.

Die Ausbeute läßt sich erheblich steigern, wenn zusätzlich Hydrierungs- bzw. Dehydrierungskatalysatoren in feinverteilter Form anwesend sind. Beispiele hierfür sind Metalle der Nebengruppen I und VIII des periodischen Systems der Elemente, wie Cu, Fe, Ni, Co, Pt und Pd sowie Mischkatalysatoren, ferner Salze des Fe, Zn, Co, Mn und Cr. Als besonders geeignet haben sich Cn, Ni und Platinmetalle sowie deren Legierungen erwiesen. Der Zusatz an diesen Dehydrierungskatalysatoren kann 0,1 bis 5 Gew.-%, vorzugsweise 0,2 bis 2 Gew.-%, bezogen auf das Reaktionsgemisch, betragen.

Die GUERBET-Reaktion findet bei Temperaturen zwischen 150 bis 280 °C, vorzugsweise zwischen 180 bis 250 °C statt. Bei Temperaturen oberhalb des Siedepunktes der Alkohole (Octanol 194°, Decanol 229°, Benzylalkohol 205°) wird in einem Druckbehälter gearbeitet. Das bei der Reaktion gebildete Wasser wird zweckmäßigerweise aus dem Reaktionsgemisch entfernt, beispielsweise durch Abdestillieren, wobei der Alkohol als Schleppmittel dient. Das abdestillierte Azeotrop wird vor der Rückführung in das Reaktionsgemisch entwässert, wobei wegen des geringen Dichteunterschiedes zwischen Benzylalkohol und Wasser zweckmäßigerweise wasserentziehende Mittel zugesetzt werden. Als wasserentziehende Mittel eignen sich z. B. kristallwasserbindende Salze wie Natriumsulfat sowie konzentrierte Lösungen dieser Salze.

Nach Abschluß der Reaktion, die je nach angewendeten Reaktionsbedingungen 0,5 bis 5 Stunden benötigt, wird der Katalysator abgetrennt, was durch Dekantieren oder Abfiltrieren erfolgen kann. Noch gelöstes Alkali kann zuvor neutralisiert werden. Das Reaktionsgut enthält im allgemeinen neben nicht umgesetztem Ausgangsmaterial, insbesondere überschüssigem Benzylalkohol, auch aliphatische GUERBET-Alkohole, die durch Selbstkondensation der Alkanole untereinander entstehen. Die 2-Benzylalkanole-(1) werden aus diesem Gemisch durch fraktionierte Destillation isoliert. In den Fällen, in denen die anwesenden aliphatischen GUERBET-Alkohole nicht stören und in Form ihre Alkoxylate mitverwendet werden können, genügt es, wenn der überschüssige Benzylalkohol und andere Nebenprodukte abgetrennt werden. Als Nebenprodukt fallen hauptsächlich Alkalimetallsalze von Säuren, insbesondere Kaliumbenzoat an, das durch Dehydrierung des Benzylalkohols entstanden ist. Diese im Reaktionsgut unlöslichen Salze lassen sich zusammen mit dem Katalysator leicht mechanisch bzw. durch Auswaschen mit Wasser abtrennen.

Das in 1. Stufe gebildete 2-Benzylalkanol-(1) wird in an sich bekannter Weise mit Alkylenoxiden zu den entsprechenden Polyglykolethern umgesetzt. Als Alkylenoxide kommen insbesondere Ethylenoxid und Propylenoxid sowie deren Gemische in Frage. Die Alkylenoxide können außerdem in unterschiedlicher Reihenfolge zum Einsatz kommen, d. h. die 2-Benzylalkanole werden zunächst mit Ethylenoxid und anschließend mit Propylenoxid umgesetzt. Auch die umgekehrte Reihenfolge ist möglich und führt ebenfalls zu gut brauchbaren Produkten.

In analoger Weise wie die 2-Benzylalkanol-Polyglykolether lassen sich auch 2-Alkylalkanol-(1)-polyglykolether mit unverzweigtem Alkylrest durch homologe Guerbet-Reaktion oder durch gemischte Guerbet-Reaktion von primären und verzweigten Alkoholen darstellen. Für die erfindungsgemäße Verwendung sind die Umsetzungsprodukte von 2-Alkylalkanolen, die 8 - 20 C-Atomen in der Hauptkette und 4 - 16 C-Atome in der Alkylseitenkette aufweisen, mit Ethylenoxid und/oder Propylenoxid geeignet. Dabei können 2-Alkylalkanole von Produkten eingesetzt werden, die sich von unverzweigten, primären Alkanolen mit gerader oder ungerader Anzahl an C-Atomen ableiten. So sind insbesondere die Dimerisierungsprodukte von Fettalkoholen oder von den analogen Ziegler-Alkoholen geeignet, wobei entweder reine Alkohole oder vorzugsweise deren Gemische eingesetzt werden können.

Erfindungsgemäß werden bei der Emulsionspolymerisation Umsetzungsprodukte von 2-Alkylalkanolen mit 5 - 100 mol Ethylenoxid, vorzugsweise 5 - 80 mol Ethylenoxid und insbesondere 8 - 50 mol Ethylenoxid pro mol 2-Alkylalkanol eingesetzt. Gewünschtenfalls können diese Produkte zusätzlich mit 1 - 20 mol Propylenoxid pro mol umgesetzt worden sein. Dabei wurde gefunden, daß Produkte, die mehr als 30 mol Ethylenoxid pro mol langkettigem Rest enthalten, auch als Alleinemulgatoren günstige Eigenschaften aufweisen. So sind günstige Alleinemulgatoren beispielsweise die Umsetzungsprodukte mit 30 - 100 mol Ethylenoxid pro mol 2-Alkylalkanol insbesondere pro mol 2-Benzylalkanol-(1). Die Umsetzungsprodukte der 2-Alkylalkanole mit Ethylenoxid finden bei einem Ethylenoxidgehalt von 5 - 30 mol Ethylenoxid pro mol 2-Alkylalkanol-(1) bevorzugt in Kombination mit anionischen oder kationischen Emulgatoren Einsatz.

Die erfindungsgemäß eingesetzten Umsetzungsprodukte von 2-Alkylalkanolen mit Ethylenoxid oder gewünschtenfalls Propylenoxid, hier kurz 2-Alkylalkanol-1-Polyglykolether genannt, können zur Emulsionspolymerisation zahlreicher ethylenisch ungesättigter Monomerer verwendet werden. So können die Verbindungen erfindungsgemäß bei der Emulsionspolymerisation von Monoolefinen verwendet werden. Geeignete Monoolefine sind beispielsweise Styrol oder andere Vinylaromaten wie Methylstyrol, ferner Propen-Isobuten. Es ist weiterhin möglich, die Emulgatoren bei der Emulsionspolymerisation von Diolefinen einzusetzen insbesondere dann, wenn Polymere entstehen, deren Glastemperatur unterhalb Raumtemperatur liegt.

Erfindungsgemäß kann man die Substanzen bei der Emulsionspolymerisation von Estern und/oder Amiden der Acryl- und/oder Methacrylsäure einsetzen. So können die Verbindungen verwendet werden bei der Polymerisation der Methyl-, Ethyl-, Propyl-, Isopropyl-, Butyl-, Hexyl-, und/oder 2-Ethylhexylester der Acrylsäure und/oder der Methacrylsäure. Ferner sind die Emulgatoren bei der Emulsionspolymerisation von n-Alkylamiden der Acrylsäure und/oder Methacrylsäure geeignet.

Erfindungsgemäß können die 2-Alkylalkanol-1-Polyglykolether auch bei der Emulsionspolymerisation von Vinylestern eingesetzt werden. Geeignete Vinylester sind Vinylacetat, Vinylpropionat, Vinyl-2-ethylhexanat sowie höhere Ester des Vinylalkohols, insbesondere Versaticsäurevinylester. Eine weitere Ausführungsform der Erfindung betrifft die Verwendung bei der Polymerisation von Vinylhalogeniden. Bevorzugte Vinylhalogenide sind Vinylchlorid und Vinylidenchlorid. Die Emulgatoren können weiterhin bei der Copolymerisation von mindestens einem der genannten Monomeren mit weiteren, gegebenenfalls auch mit zumindest teilweise wasserlöslichen Monomeren eingesetzt werden. So sind sie bei der Copolymerisation ethylenisch ungesättiger Monomerer mit Acrylnitril, mit Methacrylnitril, Malein- bzw. Fumarestern, wie Dinbutylmaleinat oder mit Monobutylmaleinat geeignet. Schließlich können die Emulgatoren auch bei der Emulsionspolymerisation von Mischungen der genannten Monomeren verwendet werden, etwa von Acrylaten mit Styrol, Ethylen mit Vinylacetat gewünschtenfalls in Gegenwart von Vinylchlorid sowie Vinylacetat-Versaticsäurevinylester. So sind die Emulgatoren geeignet zur Herstellung von Kautschuklatices im weitesten Sinne, etwa von solchen auf Basis von Butadien, Isopren, chlorierten Butadienen oder chlorierten Isoprenen sowie auf Basis von Copolymeren von Diolefinen mit Styrol oder Acrylnitril.

Erfindungsgemäß werden die Emulgatoren auch bei der Emulsionscopolymerisation ethylenisch ungesättigter, im wesentlichen wasserunlöslicher Monomerer mit dissoziierbaren, wasserlöslichen Monomeren eingesetzt. Der Anteil der dissoziierbaren, wasserlöslichen Monomeren beträgt dabei, bezogen auf Gesamtmonomere, weniger als 60 Gewichtsprozent, vorzugsweise zwischen 0,5 und 15 Gewichtsprozent. Als wasserlösliche, dissoziierbare Monomere können eingesetzt werden: Acrylsäure, Methacrylsäure, Itaconsäure, Maleinsäure, Fumarsäure, Halbester der Maleinsäure, Crotonsäure, Vinylphosphonsäure, Vinylsulfonsäure und/oder 2-Acrylamido-2-methylpropansäure (AMPS). Außer den Säuren können auch deren Salze z.B. mit Alkalimetallen oder Ammoniak eingesetzt werden. Weitere geeignete Comonomere sind basische

Ester der Acryl- und/oder Methacrylsäure wie z. B. Dimethylaminoethylmethacrylat.

Erfindungsgemäß können die 2-Alkylalkanol-1-Polyglykolether neben der Verwendung als Primäremulgatoren auch mit weiteren Emulgatoren kombiniert werden. Dabei können anionaktive nichtionogene oder kationaktive Emulgatoren eingesetzt werden. Als anionaktive Emulgatoren können Seifen natürlicher oder synthetischer Fettsäuren, disproportionierte Harzseifen, wasserlösliche Salze verzweigter Monocarbonsäuren, die ebenfalls durch die Guerbet-Reaktion zugänglich sind, Fettalkoholsulfate, Fettalkoholethersulfate, Alkylphenolethersulfate, Alkylbenzolsulfonate, Paraffinsulfonate, Alkylnaphthalinsulfonate, wasserlösliche Salze sulfatierter Öle, Sulfobernsteinsäurehalbester, Sulfobernsteinsäurediester, Alkyletherphosphate, Alkylphenoletherphosphate, Alkylisethionate und/oder Alkyldiphenylethersulfonate eingesetzt werden. Als nichtionogene Emulgatoren, die mit den erfindungsgemäß verwendeten Produkten kombiniert werden können, sind z.B. Alkylphenol-, Fettsäure- und/oder Fettalkoholethoxylate geeignet. Als kationaktive Emulgatoren sind beispielsweise Fettaminhydrochloride und/oder quartäre Ammoniumverbindungen geeignet.

Die erfindungsgemäß eingesetzten 2-Alkylalkanol-1-polyglykolether können auch mit Schutzkolloiden kombiniert werden.

Geeignete Schutzkolloide sind wasserlösliche Celluloseether wie Methylcellulose, Carboxymethylcellulose, Hydroxyethylcellulose oder auch teilverseiftes Polyvinylacetat oder teilverseifte Copolymere aus Polyvinylacetat und Vinylbutylether.

Bei der erfindungsgemäßen Verwendung der 2-Alkylalkanol-1-polyglykolether beträgt ein bevorzugtes Gewichtsverhältnis zwischen Monomeren und Wasser 1 : 3 bis 1 : 1 Gewichtsteile. Die Emulgatoren werden bezogen auf Gesamtemulsionen in einer Menge von 0,5 bis 10 Gewichtsprozent, vorzugsweise 1 bis 5 Gewichtsprozent eingesetzt. Zusammen mit den Emulgatoren können die bei der Emulsionspolymerisation üblichen Hilfsstoffe eingesetzt werden. Derartige übliche Hilfsstoffe sind z.B. Polymerisationsinitiatoren und -beschleuniger, so z.B. Kalium- oder Ammoniumpersulfat, Wasserstoffperoxid, gewünschtenfalls in Kombination mit Reduktionsmitteln, wie Übergangsmetallverbindungen in Mengen zwischen 0,05 und 2 Gewichtsprozent. Weitere übliche Hilfsstoffe sind Puffersubstanzen wie Natriumhydrogencarbonat, Natriumpyrophosphat oder Natriumacetat. Verwendet werden können weiterhin Molekulargewichtsregler wie z. B. 2-Mercaptoethanol, Thioglykolsäure, Thioglykolsäureester von Ethylenglykol, Glycerin oder Pentaerythrit oder auch Isopropanol. Unter Verwendung der erfindungsgemäß geeigneten Emulgatoren kann die Emulsionspolymerisation im Temperaturbereich zwischen 20 und 120 °C, vorzugsweise zwischen 40 und 100 °C und insbesondere zwischen 50 und 80 °C durchgeführt werden. Dabei kann unter Normaldruck, oder insbesondere bei gasförmigen Monomeren, unter erhöhtem Druck gearbeitet werden. Dabei können die dem Polymerisationsfachmann bekannten Zugabeweisen angewendet werden. So kann im Reaktionsgefäß eine Emulsion hergestellt und dann polymerisiert werden. Es können aber auch Monomere, Hilfsstoffe oder die vorgebildete Emulsion während der Polymerisation chargenweise oder kontinuierlich zudosiert werden.

## Beispiele

1 Geprüfte Emulgatoren

| | |
|---|---|
| Emulgator A | 2-Benzyldodecanol + 16 EO (Umsetzungsprodukt von 1 mol 2-Benzyldodecanol mit 16 mol Ethylenoxid. Emulgatoren B - F analog). |
| Emulgator B | 2-Benzyldodecanol + 20 EO |
| Emulgator C | 2-Hexyldecanol + 15 EO |
| Emulgator D | 2-Hexyldecanol + 30 EO |
| Emulgator E | 2-Hexyldecanol + 50 EO |
| Emulgator F | 2-Octyldodecanol + 43 EO |

2 Vergleichsemulgatoren

| | |
|---|---|
| Emulgator E | Nonylphenol + 15 EO |
| Emulgator H | Nonylphenol + 40 EO |

3 Durchführung der Polymerisation

3.1 Apparatur

Ein geschlossener, beheizbarer 2-l-Planschliffbecher, ausgerüstet mit V4A-Ankerrührer (100 - 150 $min^{-1}$), Tropftrichter, Rückflußkühler, 2-l-Vorlagegefäß mit Blattrührer.

3.2 Rezeptur

| Lösung 1 | |
|---|---|
| 191,54 g | entsalztes Wasser |
| 1,26 g | anionaktiver Emulgator, 100prozentig |
| 0,50 g | Kaliumperoxodisulfat |
| 0,20 g | Borax |

| Lösung 2 | |
|---|---|
| 287,39 g | entsalztes Wasser |
| 0,81 g | anionaktiver Emulgator, 100prozentig |
| 12,00 g | nichtionogener Emulgator, 100prozentig |
| 1,90 g | Kaliumperoxodisulfat |
| 2,10 g | Borax |

| Lösung 3 | |
|---|---|
| 330,10 g | Vinylacetat |
| 143,50 g | Versaticsäure-Vinylester (VeoVa$^{(R)}$-10, Shell) |
| 4,80 g | Acrylsäure |

| Zur anschließenden Neutralisation: | |
|---|---|
| 23,90 g | Ammoniumcarbonat, 10prozentig in Wasser |

3.3 Verfahren

Die Komponenten der Lösung 1 werden in das Reaktionsgefäß vorgelegt, unter Rühren 30 Minuten mit Stickstoff gespült und anschließend auf 80 °C aufgeheizt. Während der Aufheizphase wird im Vorlagegefäß die Präemulsion hergestellt, indem die Monomerlösung 3 unter Rühren der wäßrigen Phase Lösung 2 zugefügt wird. Der pH-Wert dieser Präemulsion sollte bei 3,8 bis 4,0 liegen. Bei Erreichen der Reaktorinnentemperatur von 80 °C wird die Monomer-Präemulsion über einen Zeitraum von 2 bis 2,5 Stunden zudosiert. Nach beendeter Zugabe wird die Temperatur des Reaktionsgemisches weitere 2 Stunden bei 80 °C gehalten. Danach wird die Dispersion abgekühlt und filtriert und der pH-Wert mit einer 10prozentigen Ammoniumcarbonat-Lösung auf ca. 7 eingestellt.

4 Prüfmethoden

4.1 Koagulatgehalt nach der Herstellung

Die fertiggestellte Dispersion wird durch einen tarierten Perlonsiebbeutel der Firma Schwegmann mit 80 micron Maschenweite abgefüllt. Der Siebbeutel mit eventuell vorhandenem Koagulat wird 24 Stunden bei 105 °C getrocknet und das Koagulat durch Differenzwägung bestimmt.

4.2 Bestimmung der Teilchengröße

Bestimmung des mittleren Teilchengrößenbereichs durch automatische Messung im Nano-Sizer (Fa. Coulter Electronics)

Die gemessenen Werte werden vom Bestimmungsgerät in nm ermittelt. Neben der mittleren Teilchengrößenmessung kann mit dem Nano-Sizer eine Aussage über die Polydispersität einer Dispersion gemacht werden.

Durch den Polydispersitätsindex wird die Teilchengrößenverteilung einer Dispersion klassifiziert. Die Teilchengrößenverteilung wird einem Zahlenwert von 0 bis 9 zugeordnet, wobei der Zahlenwert 0 bis 1 ausschließlich monodispers und der Zahlenwert 8 bis 9 ausschließlich polydispers bedeutet.

4.3 Trockengehalt

Trockenrückstandsbestimmungswaage (Fa. Sartorius), Typ 709301. Der Feststoffgehalt wird bei Stufe 7 und 20 min Trockenzeit bestimmt. Die Einwaage beträgt ca. 5 g.

4.4 Viskosität

Die Viskosität wird mit einem Brookfield-Viskosimeter vom Typ RVT bei 25 °C gemessen.

4.5 Elektrolytstabilität

Je 10 ml der unverdünnten Dispersion werden mit 10 ml folgender Salz-(Elektrolyt-)Lösung versetzt: Calciumchloridlösung, 1prozentig und 10prozentig.

T a b e l l e 1

| Ansatz-Nr. | Emulgatoren: anionaktiver Coemulgator | Emulgatoren: geprüfter nichtionogener Emulgator | % Trockenrückstand der Dispersion: theor. | % Trockenrückstand der Dispersion: prakt. | % Koagulat bei der Herstellung: Siebbeutel | % Koagulat bei der Herstellung: Wandbelag | Teilchengröße in $m \cdot 10^{-6}$: Nano-Sizer | Teilchengröße: Polydispersit.-Index | pH-Wert |
|---|---|---|---|---|---|---|---|---|---|
| 1 | x | + Emulgator C | 50,0 | 49,6 | < 0,1 | 0,5 | 0,164 | 0 - 3 | 6,6 |
| 2 | x | + Emulgator D | 50,0 | 49,6 | 0,1 | 0,3 | 0,174 | 0 - 1 | 6,6 |
| 3 | x | + Emulgator E | 50,0 | 49,3 | 0,1 | 0,5 | 0,173 | 0 - 1 | 6,7 |
| 4 | x | + Emulgator G | 50,0 | 49,4 | < 0,1 | 0,7 | 0,160 | 3 - 5 | 6,9 |
| 5 | x | + Emulgator H | 50,0 | 49,1 | < 0,1 | 0,8 | 0,175 | 0 - 3 | 7,0 |
| 6 | x | + Emulgator F | 50,0 | 49,2 | 0,5 | 3,0 | 0,164 | 2 - 5 | 6,7 |
| 7 | xx | + Emulgator C | 50,0 | 49,7 | < 0,1 | 0,3 | 0,169 | 2 - 3 | 7,0 |
| 8 | xx | + Emulgator D | 50,0 | 49,1 | 0,1 | 2,0 | 0,182 | 0 - 1 | 6,7 |
| 9 | xx | + Emulgator E | 50,0 | 49,0 | 0,1 | 1,3 | 0,185 | 0 - 2 | 6,7 |
| 10 | xx | + Emulgator G | 50,0 | 49,2 | 0,5 | 1,0 | 0,188 | 0 - 3 | 6,9 |
| 11 | xx | + Emulgator H | 50,0 | 49,0 | 0,1 | 1,0 | 0,172 | 0 - 5 | 6,9 |
| 12 | xx | + Emulgator F | 50,0 | 49,0 | 0,5 | 3,5 | 0,186 | 0 - 3 | 6,7 |
| | xx | + Emulgator A | 50,0 | 49,3 | 0,1 | 1,0 | 0,180 | 0 - 3 | 6,9 |
| | xx | + Emulgator B | 50,0 | 49,1 | 0,1 | 1,2 | 0,170 | 0 - 2 | 6,9 |

x anionaktiver Coemulgator: Gemisch einer α-Sulfofettsäure, Di-Na-Salz mit einem α-Sulfofettsäureester, Na-Salz, entsprechend DE-A-33 39 407

xx anionaktiver Coemulgator: Sulfobernsteinsäurehalbester eines Fettalkoholpolyglykolethers, Di-Na-Salz

Tabelle 2

| Ansatz-Nr. | Emulgatoren: anionaktiver Coemulgator | Emulgatoren: geprüfter nichtionogener Emulgator | Viskosität nach Brookfield bei 25 °C: Spindel | Viskosität nach Brookfield bei 25 °C: $min^{-1}$ | Viskosität nach Brookfield bei 25 °C: mPa.s | % Koagulat bei der Elektrolytstabilität in Calciumchlorid-Lösung: 1prozentig | % Koagulat bei der Elektrolytstabilität in Calciumchlorid-Lösung: 10prozentig | MFT °C |
|---|---|---|---|---|---|---|---|---|
| 13 | x | + Emulgator C | 1 | 20 | 110,0 | 0 | 0 | 14 |
| 14 | x | + Emulgator D | 1 | 20 | 97,5 | 0 | 0 | 14 |
| 15 | x | + Emulgator E | 1 | 20 | 82,5 | 0 | 0 | 14 |
| 16 | x | + Emulgator G | 1 | 20 | 87,5 | 0 | 0 | 14 |
| 17 | x | + Emulgator H | 1 | 20 | 92,5 | 0 | 0 | 14 |
| 18 | x | + Emulgator F | 1 | 20 | 72,5 | 0 | 0 | 14 |
| 19 | xx | + Emulgator C | 1 | 20 | 97,5 | 0 | 0 | 13 |
| 20 | xx | + Emulgator D | 1 | 20 | 65,0 | 0 | 0 | 14 |
| 21 | xx | + Emulgator E | 1 | 20 | 67,5 | 0 | 0 | 14 |
| 22 | xx | + Emulgator G | 1 | 20 | 82,5 | 0 | 0 | 13 |
| 23 | xx | + Emulgator H | 1 | 20 | 80,0 | 0 | 0 | 14 |
| 24 | xx | + Emulgator F | 1 | 20 | 55,0 | 0 | 0 | 14 |
| 25 | xx | + Emulgator A | 1 | 20 | 93,0 | 0 | 0 | 14 |
| 26 | xx | + Emulgator B | 1 | 20 | 86,5 | 0 | 0 | 14 |

x anionaktiver Coemulgator: Gemisch einer α-Sulfofettsäure, Di-Na-Salz mit einem α-Sulfofettsäureester, Na-Salz, entsprechend DE-A 33 39 407

xx anionaktiver Coemulgator: Sulfobernsteinsäurehalbester eines Fettalkoholpolyglykolethers, Di-Na-Salz

## Patentansprüche

1. Verwendung der Umsetzungsprodukte von primären 2-Alkylalkanolen, die 12 - 36 C-Atome aufweisen, mit Ethylenoxid und gewünschtenfalls Propylenoxid als Emulgatoren oder Coemulgatoren bei der Emulsionspolymerisation ethylenisch ungesättigter Monomerer in einer Menge von 0,1 bis 10 Gew.-% bezogen auf Gesamtdispersion.

2. Ausführungsform nach Anspruch 1, dadurch gekennzeichnet, daß die den Umsetzungsprodukten zugrunde liegenden 2-Alkylalkanole 8 - 20 C-Atome in der Hauptkette und 4 - 16 C-Atome in der Alkylseitenkette aufweisen.

3. Ausführungsform nach den Ansprüchen 1 und 2, dadurch gekennzeichnet, daß die den Umsetzungsprodukten zugrunde liegenden 2-Alkylalkanole als Alkylseitenkette einen Benzylrest aufweisen.

4. Ausführungsform nach den Ansprüchen 1 - 3, dadurch gekennzeichnet, daß Umsetzungsprodukte von 2-Alkylalkanolen mit 5 - 80, vorzugsweise 8 - 50 mol Ethylenoxid pro mol und gewünschtenfalls 1 - 20 mol Propylenoxid pro mol eingesetzt werden.

5. Ausführungsform nach den Ansprüchen 1 - 4, dadurch gekennzeichnet, daß die Umsetzungsprodukte in einer Menge von 0,5 - 5 Gew.-%, bezogen auf Gesamtdispersion, eingesetzt werden.

6. Ausführungsform nach den Ansprüchen 1 - 5, dadurch gekennzeichnet, daß die Umsetzungsprodukte der 2-Alkylalkanole mit Ethylenoxid und gewünschtenfalls Propylenoxid bei der Homo- oder Copolymerisation von Olefinen, Halogenolefinen und/oder Estern und/oder Amiden polymerisierbarer ungesättigter Carbonsäuren in Emulsion eingesetzt werden.

## Claims

1. The use of the reaction products of primary 2-alkylalkanols containing from 12 to 36 carbon atoms with ethylene oxide and, if desired, propylene oxide as emulsifiers or co-emulsifiers in the emulsion polymerization of ethylenically unsaturated monomers in a quantity of 0.1 to 10% by weight, based on the dispersion as a whole.

2. The use claimed in claim 1, characterized in that the 2-alkylalkanols on which the reaction products are based contain from 8 to 20 carbon atoms in the main chain and from 4 to 16 carbon atoms in the alkyl side chain.

3. The use claimed in claims 1 and 2, characterized in that the 2-alkylalkanols on which the reaction products are based contain a benzyl group as alkyl side chain.

4. The embodiment claimed in claims 1 to 3, characterized in that reaction products of 2-alkylalkanols with from 5 to 80 and preferably from 8 to 50 mol ethylene oxide per mol and, if desired, from 1 to 20 mol propylene oxide per mol are used.

5. The use claimed in claims 1 to 4, characterized in that the reaction products are used in a quantity of from 0.5 to 5% by weight, based on the dispersion as a whole.

6. The use claimed in claims 1 to 5, characterized in that the reaction products of the 2-alkylalkanols with ethylene oxide and, if desired, propylene oxide are used in the homopolymerization or copolymerization of olefins, halo-olefins and/or esters and/or amides of polymerizable unsaturated carboxylic acids in emulsion.

## Revendications

1. Utilisation de produits de condensation de 2-alkylalcanols primaires, qui présentent 12-36 atomes de C, avec l'oxyde d'éthylène et, si on le désire avec l'oxyde de propylène comme émulsionnants ou co-émulsionnants en polymérisation en émulsion de monomères éthyléniquement insaturés, à une concentration de 0,1 à 10 % en poids rapportée à la dispersion totale.

2. Mode de réalisation selon la revendication 1, caractérisé en ce que les 2-alkylalcanols à la base des produits de condensation présentent 8-20 atomes de C dans la chaîne principale et 4-16 atomes de C dans la chaîne latérale alkyle.

3. Mode de réalisation selon les revendications 1 et 2, caractérisé en ce que les 2-alkylalcanols à la base des produits de condensation présentent un reste benzyle comme chaîne latérale alkyle.

4. Mode de réalisation selon les revendications 1-3, caractérisé en ce qu'on met en oeuvre des produits de condensation de 2-alkylalcanols avec 5-80, de préférence 8-50 moles d'oxyde d'éthylène par mole et si on le désire 1-20 moles d'oxyde de propylène par mole.

5. Mode de réalisation selon les revendications 1-4, caractérisé en ce qu'on met en oeuvre les produits de condensation à une concentration de 0,5-5 % en poids, par rapport à la totalité de l'émulsion.

6. Mode de réalisation selon les revendications 1-5, caractérisé en ce qu'on met en oeuvre dans l'émulsion les produits de condensation des 2-alkylalcanols avec de l'oxyde d'éthylène et si on le désire de l'oxyde de propylène en homo- et copolymérisation d'oléfines, d'halogénooléfines et/ou d'esters et/ou d'amides d'acides carboxyliques insaturés polymérisables.